# EUROPÄISCHE PATENTSCHRIFT

(11) **EP 3 183 472 B1**
(45) Veröffentlichungstag und Bekanntmachung des Hinweises auf die Patenterteilung: **01.05.2019**
(21) Anmeldenummer: 15771502.0
(22) Anmeldetag: 19.08.2015
(51) Int. Cl.: F16G 1/08, F16G 5/06, F16G 1/28, F16G 5/20

(54) **KRAFTÜBERTRAGUNGSRIEMEN**
FORCE TRANSMISSION BELT
COURROIE DE TRANSMISSION DE FORCE

(30) Priorität: 20.08.2014 DE 102014012189
(43) Veröffentlichungstag der Anmeldung: 28.06.2017
(73) Patentinhaber: Arntz Beteiligungs GmbH & Co. KG, 37671 Höxter (DE)
(72) Erfinder: HAZIM, Salem, 37671 Höxter (DE); GIEßMANN, Michael, 37671 Höxter (DE)
(74) Vertreter: Lins, Martina
(86) Internationale Anmeldenummer: PCT/DE2015/000419
(87) Internationale Veröffentlichungsnummer: WO 2016/026480

(56) Entgegenhaltungen:
- EP-A1- 2 765 333
- EP-A2- 1 439 322
- WO-A1-2012/025278
- DE-C- 316 255
- GB-A- 958 256
- US-A1- 2013 240 332

## Beschreibung

Die Erfindung betrifft einen aus wenigstens einem Riemenmaterial gebildeten Kraftübertragungsriemen, in Form eines Endlosriemens, mit einer Riemenlängsrichtung und einer quer dazu erstreckten Riemenbreite, enthaltend einen Riemenrücken, eine Zugträgerzone mit mehreren parallel zueinander über die Riemenbreite mit Abstand neben-einander angeordneten Zugträgern und einer sich an die Zugträgerzone anschließenden Kraftübertragungszone.

Die für die vorliegende Erfindung in Frage kommenden Kraftübertragungsriemen können aus einem beliebigen bekannten Riemenmaterial bestehen, beispielsweise aus einem Gummielastomer, Polyvinylchlorid, Polyurethan o. dgl.. Dabei muss das Riemenmaterial nicht einheitlich sein. Es ist bekannt, das zum Riemenrücken zeigende und die Zugträgerzone umgebende Riemenmaterial anders auszubilden als das Riemenmaterial in der Kraftübertragungszone. Der Riemenrücken kann dabei durch das Riemenmaterial selbst gebildet sein, besteht jedoch vorzugsweise aus einer auf das Riemenmaterial aufgebrachten Schicht. Diese Schicht kann eine textile Lage, aber auch eine Beschichtung aus einem Kunststoffmaterial sein. Die Schicht kann insbesondere dazu dienen, den Riemen zu stabilisieren und die Verschleißeigenschaften zu verbessern.

Die in dem Kraftübertragungsriemen in der Zugträgerzone angeordneten Zugträger bestehen bei herkömmlichen Kraftübertragungsriemen üblicherweise aus einem drahtförmigen Material, das in das Riemenmaterial vor dessen Vernetzung/Vulkanisation eingelegt wird. Das drahtförmige Material kann aus Stahl oder aus einem allenfalls nur wenig dehnbaren Kunststoff bestehen.

Durch WO 92/10694 A1, EP 1 669 635 A1 und DE 10 2006 025 562 A1 ist es bekannt, die Zugträgerzone nicht durch nebeneinander angeordnete Zugträger sondern durch eine sich über die Riemenbreite erstreckende vorgestreckte Kunststofffolie, nämlich aus Polyamid oder Copolyamid, auszubilden. Um eine belastungsfähige Verbindung mit dem Riemenmaterial herzustellen, wird die Kunststofffolie beidseitig mit Haftvermittler bestrichen. Die Dauerbelastungsfähigkeit eines derartigen Aufbaus hängt somit von der Beständigkeit der Klebverbindung zwischen der Folie und dem sich beidseitig anschließenden Riemenmaterial ab, wobei auf diese Klebverbindung erhebliche Scherkräfte ausgeübt werden, wenn der Riemen in Längsrichtung belastet wird und die Zugträgerzone ihre vorbestimmte Funktion ausübt.

Die GB 958 256 A offenbart Riemen, die als Laminat aus einer Vielzahl von Schichten aufgebaut sind. Wenigstens eine der Schichten besteht aus gelängten, aneinander angrenzenden längsverlaufenden Polyamid- oder Polyurethanbändern,die in Querrichtung mit Streifen oder Fäden verwoben oder auf sonstige Weise miteinander verbunden sind. Wenigstens eine weitere Schicht besteht aus einem thermoplastischen Textilmaterial. Die Schichten werden heiß verpresst oder verklebt.

Die EP 2 765 333 A1 offenbart eine Festigkeitsträgerlage mit bandförmigen Festigkeitsträgern in Ersatz von Stahlcorden für Fahrzeugluftreifen oder Riemen. Dies dient u.a. der Gewichtsreduktion. Die Bänder bestehen aus einer Vielzahl von Filamenten aus einem nicht-metallischen Material, die mit Haftvermittler, vorzugsweise einem Harz oder einem Wachs untereinander verklebt sind.

Durch US 2013/0240332 A1 ist es ferner bekannt, eine Zugträgerzone an einem Endlosflachriemen durch Verstärkungsgewebe auszubilden. Dabei werden wenigstens zwei Verstärkungsgewebelagen gebildet, die miteinander verklebt oder über eine Elastomerlage miteinander verbunden sein. Die Verstärkungsgewebe werden bevorzugt durch Spiralwicklung auf einen Wickelkern für den Endlosriemen aufgewickelt, wobei die Wicklungen dicht an dicht liegen und von Lage zu Lage überlappend gegeneinander versetzt und gegebenenfalls zusätzlich in weiteren Lagen gegenwinklig verschränkt werden, sodass sich das Verstärkungsgewebe als ununterbrochene Schicht über die Riemenbreite erstreckt. Auch bei dieser Anordnung hängt die Belastungsfähigkeit des Riemens von der Klebverbindung zwischen dem Verstärkungsgewebe und dem Riemenmaterial ab.

Auch bei den herkömmlichen Kraftübertragungsriemen mit drahtförmigen Zugträgern stellt der Spannungsverlauf zwischen Zugträger und Riemenmaterial eine die Haltbarkeit des Riemens unter Dauerbelastung begrenzende Einflussgröße dar.

Der vorliegenden Erfindung liegt daher die Aufgabe zugrunde, einen Kraftübertragungsriemen der eingangs erwähnten Art hinsichtlich des Spannungsverlaufs innerhalb des Riemens bei einer Belastung im üblichen Betrieb zu verbessern.

Die Aufgabe wird gelöst mit den Merkmalen des Anspruchs 1. Hierfür ist ein Kraftübertragungsriemen der eingangs erwähnten Art erfindungsgemäß dadurch gekennzeichnet, dass die Zugträger durch wenigstens zwei schmale Streifen eines vorgestreckten Kunststoffmaterials gebildet sind, die über die Riemenbreite nebeneinander angeordnet und durch Riemenmaterial voneinander beabstandet sind, wobei die die Zugträger bildenden beabstandeten Streifen beim Riemenaufbau durch eine Spiralwicklung eines Streifens gebildet sind.

Bei dem erfindungsgemäßen Kraftübertragungsriemen sind die üblichen drahtförmigen Zugträger somit durch schmale Streifen eines vorgestreckten Kunststoffmaterials ersetzt. Überraschenderweise lassen sich dabei vergleichbar große Axialkräfte über die Zugträgerzone übertragen wie bei den drahtförmigen Zugträgern. Die Streifen sind dabei vollständig in das Riemenmaterial eingebettet, weil sich das Riemenmaterial durch die in der Riemenbreite bestehenden Abstände zwischen den Streifen erstreckt, wodurch eine formschlüssige Positionierung der Zugträgerstreifen erreicht wird. Die stabile Verbindung zwischen den Zugträgern und dem Riemenmaterial ergibt sich daher nicht nur als stoffschlüssige Verbindung, sondern auch in Form einer formschlüssigen Verbindung. Es zeigt sich, dass durch den erfindungsgemäßen Aufbau eines Kraftübertragungsriemens die in Längsrichtung des Riemens auftretenden Spannungen (Axialspannungen) deutlich geringer sind als bei dem herkömmlichen Aufbau mit drahtförmigen Zugträgern. Hierfür dürfte die flächige Verbindung zwischen den streifenförmigen Zugträgern und dem Riemenmaterial und die den flächigen, streifenförmigen Zugträgern innewohnenden Ausgleichseigenschaft für auftretende Spannungen ursächlich sein.

Die schmalen Streifen können, müssen aber nicht eine jeweils gleiche Breite aufweisen. Erfindungsgemäß sind wenigstens zwei schmale Streifen über die Riemenbreite nebeneinander angeordnet, sodass sich wenigstens ein Abstand ausbildet, der durch Riemenmaterial gefüllt ist. Es kann vorteilhaft sein, wenigstens drei schmale Streifen über die Riemenbreite nebeneinander anzuordnen, sodass wenigstens zwei durch das Riemenmaterial gefüllte Abstände vorhanden sind. Für viele Anwendungen wird es zweckmäßig sein, dass wenigstens fünf schmale Streifen mit Abstand zueinander über die Breite des Riemens nebeneinander angeordnet sind. In allen Fällen weisen die Streifen durchschnittlich eine vielfach größere Breite als Dicke auf. Das Verhältnis von Breite zu Dicke beträgt vorzugsweise 5:1 und größer, weiter bevorzugt 10:1 und größer.

Das Riemenmaterial muss kein einheitliches Material sein. Vielmehr ist es üblich, dass der Grundkörper des Riemens im Bereich der Kraftübertragungszone aus einem anderen Material besteht als am Riemenrücken und/oder in der Einbettungszone der Zugträger. In vielen Fällen ist eine Ausführungsform vorteilhaft, in der die Trennlinie zwischen dem Riemenmaterial der Kraftübertragungszone und dem Riemenmaterial des Riemenrückens mittig durch Kraftübertragungszone, im vorliegenden Fall also im Bereich der schmalen Streifen, verläuft. In anderen Anwendungsfällen kann es vorteilhaft sein, dass sich an das Riemenmaterial der Kraftübertragungszone ein Riemenmaterial einer Einbettungszone für die Zugträger anschließt, sodass das Einbettungsmaterial die schmalen Streifen der Zugträgerzone vollständig umgibt. Riemenrückenseitig schließt sich dann ein weiteres Riemenmaterial an. Im Allgemeinen wird in der Kraftübertragungszone ein Riemenmaterial verwendet, das hohen Abriebsforderungen gerecht wird, während zum Riemenrücken hin das Riemenmaterial in erster Linie eine gewisse Elastizität und Widerstandsfähigkeit gegen Zugspannungen aufweist. Sofern ein eigenes Einbettungsmaterial verwendet wird, kann dies für eine feste Materialverbindung mit den schmalen Streifen der Zugträgerzone optimiert sein.

Die Erfindung ist für alle Arten von Kraftübertragungsriemen, die eine Zugträgerzone aufweisen, von Bedeutung. Demgemäß können die erfindungsge-mäßen Kraftübertragungsriemen Flachriemen, Keilriemen, Keilrippenriemen, Zahnriemen o.dgl. sein.

Als Material für die erfindungsgemäß verwendete vorverstreckte Folie hat sich insbesondere eine Polyamid 6.6-Folie bewährt. Die erfindungsgemäßen Streifen der Zugträgerzone können jedoch für Anwendungsfälle vorteilhaft auch aus Polyester oder einem Copolymer aus Polyester und Polyamid bestehen.

Die Streifen werden spiralförmig aufgewickelt. Die Spiralwicklung lässt sich rationell fertigen. Aufgrund der Spiralwicklung entstehen jeweils an den Rändern der Riemenbreite - je nach Umfangswinkel - unterschiedliche Breiten der schmalen Streifen aufgrund der Anpassung an die Breite des Kraftübertragungsriemens.

Erfindungsgemäß besteht wenigstens ein Abstand in Breitenrichtung des Riemens zwischen zwei schmalen Streifen, der durch Riemenmaterial ausgefüllt ist. Bevorzugt sind jedoch wenigstens zwei, vorzugsweise wenigstens vier Abstände.

Die Streifen bestehen vorzugsweise aus einer einschichtigen Folienlage, können jedoch auch durch mehrere aufeinander gewickelte Folienlagen bestehen, wobei die aufeinander liegenden Lagen flächig miteinander verbunden sind.

Die Streifen haben vorzugsweise eine Breite zwischen 1 und 25 mm in Abhängigkeit von der Breite des Riemens und ein Längengewicht zwischen 900 dtex und 80000 dtex. Bei dem Aufbau der Streifen aus einer einlagigen Folie wird das Längengewicht für die verwendete Breite der Streifen somit von der Ausgangsfolie aufgebracht.

Der erfindungsgemäße Aufbau ist mit jedem geeigneten Riemenmaterial möglich. Für viele Anwendungsfälle ist es bevorzugt, ein Riemenmaterial aus einer vulkanisierten Kautschukmischung zu verwenden, wobei es sich bei dem Kautschuk bevorzugt um Ethylen-Propylenterpolymer(dien)-Kautschuk (EPDM), Chloropren-Kautschuk (CR) oder alkyliertes-chlorsulfoniertes Polyethylen (ACSM) handelt. Andere Riemenmaterialien, wie Polyurethan und Poly-vinylchlorid, können für die Erfindung ebenfalls Verwendung finden.

Die Erfindung soll im Folgenden anhand eines in der Zeichnung dargestellten Ausführungsbeispiels näher erläutert werden.
- Figur 1: - zeigt einen Hochschnitt in Breitenrichtung durch einen erfindungsgemäß ausgebildeten Keilrippenriemen,
- Figur 2: - die Darstellung eines Vergleichsversuchs eines Serienriemens mit einem Polyamid-Cord und eines erfindungsgemäßen im Übrigen gleich aufgebauten Riemens mit einer aus schmalen Streifen gebildeten Zugträgerschicht bezüglich des dynamischen Riemenschrumpfs und des Trumkraftverlusts im Dauerlauftest.

Der Keilrippenriemen weist einen Riemenrücken 1 in Form einer Textilschicht auf. An den Riemenrücken 1 schließt sich in dem dargestellten Ausführungsbeispiel ein einheitliches Riemenmaterial 2 an, das beispielsweise aus Polyurethan besteht. Mit Abstand und parallel zu dem Riemenrücken 1 erstreckt sich eine Zugträgerzone 3 über die in der Zeichnung erkennbare Breite des Kraftübertragungsriemens. Die Zugträgerzone 3 wird aus über die Breite nebeneinander angeordneten Streifen 4 aus einer vorgestreckten Kunststofffolie, vorzugsweise aus Polyamid 6.6, gebildet. Die Streifen 4 weisen in Breitenrichtung jeweils einen Abstand 5 voneinander auf, der durch das Riemenmaterial ausgefüllt ist, sodass die Streifen 4 vollständig in das Riemenmaterial eingebettet sind. Der Abstand 5 ist kleiner als die Breite der Streifen 4. Der Abstand 5 beträgt zwischen 1/2 und 1/6 der Breite des Streifens 4. Vom Riemenrücken 1 aus gesehen jenseits der Zugträgerzone 3 beginnt eine Kraftübertragungszone 6, die in dem dargestellten Ausführungsbeispiel eines Keilrippenriemens in Längsrichtung des Riemens verlaufende keilförmige Rippen 7 ausbildet.

Obwohl im vorliegenden Ausführungsbeispiel nicht dargestellt, kann die Oberfläche der Kraftübertragungszone 6, also beispielsweise der Keilrippen 7 mit einer abriebfesten Schicht versehen sein, beispielsweise aus einem Textil.

In dem dargestellten Ausführungsbeispiel sind über die Breite des Riemens fünf Streifen 4 vorgesehen. In Abhängigkeit von der jeweiligen Breite des Kraftübertragungsriemens können mehr oder weniger Streifen 4 die Zugträgerzone 3 bilden. Wesentlich ist dabei, dass das Verhältnis zwischen Abstand 5 und Streifenbreite 4 die sichere Einbettung der Streifen 4 in das Riemenmaterial 2 gewährleistet.

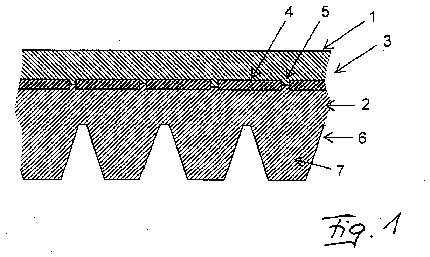

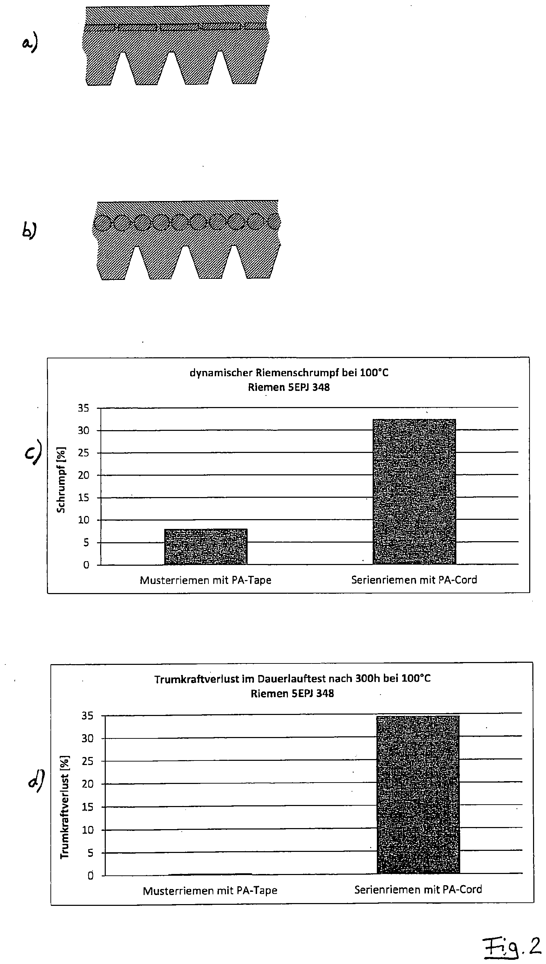

Figur 2 zeigt schematisch in der Darstellung a) den in Figur 1 beschriebenen erfindungsgemäßen Riemenaufbau im Vergleich zu einem im Übrigen gleichen Aufbau eines Serienriemens der Anmelderin (5EPJ 348), der jedoch eine Zugträgerzone mit üblichen Corddrähten gemäß der Darstellung b) aufweist.

Das Balkendiagramm gemäß Abbildung c) bezieht sich auf die Durchführung eines Riemenbetriebs über eine Stunde und eine Temperatureinstellung auf 100 °C. Gemessen wurde der Heißschrumpf der beiden verglichenen Riemen. Der Serienriemen gemäß dem Aufbau b) weist einen dynamischen Riemenschrumpf von mehr als 32 % auf, während der erfindungsgemäße Riemen gemäß Aufbau a) einen dynamischen Riemenschrumpf von etwa 8 % aufweist.

Es wurde ferner ein Dauerlauftest über 300 Stunden bei der Temperatur von 100 °C durchgeführt (Balkendiagramm gemäß Abbildung d)). Der Trumkraftverlust betrug bei dem Serienriemen gemäß b) 34 %, während er bei dem erfindungsgemäßen Riemen gemäß a) nicht feststellbar war und unter 1 % liegt. Somit ergeben sich erhebliche verbesserte dynamische Laufeigenschaften des erfindungsgemäßen Riemens gegenüber dem herkömmlichen Serienriemen.

Darüber hinaus bietet die erfindungsgemäße Ausbildung den Vorteil, dass die Streifen 4 aus der vorgestreckten Folie deutlich preiswerter und einfacher aufzubringen sind als die herkömmlichen drahtförmigen Zugträger.

## Patentansprüche

1. Kraftübertragungsriemen in Form eines Endlosriemens, gebildet aus wenigstens einem Riemenmaterial (2) mit einer Riemenlängsrichtung und einer quer dazu erstreckten Riemenbreite, enthaltend einen Riemenrücken (1), eine Zugträgerzone (3) mit mehreren parallel zueinander über die Riemenbreite mit Abstand nebeneinander angeordneten Zugträgern und einer sich an die Zugträgerzone (3) anschließenden Kraftübertragungszone (6), **dadurch gekennzeichnet, dass** die Zugträger durch wenigstens zwei schmale Streifen (4) eines vorgestreckten Kunststoffmaterials gebildet sind, die über die Riemenbreite nebeneinander angeordnet sind, wobei die Streifen (4) in Breitenrichtung jeweils einen Abstand (5) voneinander aufweisen, der durch das Riemenmaterial (2) ausgefüllt ist, wobei der Abstand (5) zwischen 1/2 und 1/6 der Breite des Streifens (4) ist, wobei die die Zugträger bildenden Streifen (4) durch eine Spiralwicklung eines Streifens über die Riemenbreite gebildet sind.

2. Kraftübertragungsriemen nach Anspruch 1, **dadurch gekennzeichnet, dass** die Streifen (4) aus Polyamid, insbesondere Polyamid 6 oder Polyamid 6.6, bestehen.

3. Kraftübertragungsriemen nach Anspruch 1 oder 2, **dadurch gekennzeichnet, dass** die Streifen (4) eine Breite zwischen 1 und 25 mm und ein Längengewicht zwischen 900 dtex und 80000 dtex aufweisen.

4. Kraftübertragungsriemen nach einem der Ansprüche 1 bis 3, **dadurch gekennzeichnet, dass** das die Streifen einbettende Material das Material der Kraftübertragungszone (6) ist.

5. Kraftübertragungsriemen nach einem der Ansprüche 1 bis 4, **dadurch gekennzeichnet, dass** das die Streifen einbettende Riemenmaterial (2) ein vulkanisierter Kautschuk, ein Polyurethan oder Polyvinylchlorid ist.

6. Kraftübertragungsriemen nach Anspruch 5, **dadurch gekennzeichnet, dass** der vulkanisierte Kautschuk ein EPDM-, ein CR- oder ein ACSM-Kautschuk ist.

7. Kraftübertragungsriemen nach einem der Ansprüche 1 bis 6, **dadurch gekennzeichnet, dass** wenigstens drei schmale Streifen (4) über die Riemenbreite nebeneinander angeordnet sind.

8. Kraftübertragungsriemen nach einem der Ansprüche 1 bis 7, **dadurch gekennzeichnet, dass** der Riemen ein Keilriemen, Keilrippenriemen oder Zahnriemen ist.

## Claims

1. A power transmission belt in the form of an endless belt, comprised of at least one belt material (2) with a belt longitudinal direction and a belt width, which extends transversely to said longitudinal direction, featuring one belt back (1), a tension member zone (3) with several tension members, which are arranged parallel and at a distance from one another across the belt width, and a power transmission zone which connects to the tension member zone (3), **characterised by the fact that** the tension members are formed of at least two narrow strips (4) of a pretensioned plastic material, said strips being arranged next to one another across the belt width, the stripes (4) having a distance (5) from each other across the belt width, the distance being filled by the belt material (2), the distance (5) being between 1/2 and 1/6 of the width of the strip (4), wherein the strips (4) that form the tension members are formed by way of a spiral winding of a strip across the belt width.

2. The power transmission belt according to claim 1, **characterised by** the fact that the strips (4) are made of polyamide, especially polyamide 6 or polyamide 6.6.

3. The power transmission belt according to claim 1 or 2, **characterised by** the fact that the strips (4) have a width of between 1 and 25mm and a linear density of between 900 dtex and 80000 dtex.

4. The power transmission belt according to one of the claims 1 to 3, **characterised by** the fact that the material that embeds the strips is the material of the power transmission zone (6).

5. The power transmission belt according to one of the claims 1 to 4, **characterised by** the fact that the belt material (2) that embeds the strips is a vulcanised rubber, a polyurethane or polyvinyl chloride.

6. The power transmission belt according to claim 5, **characterised by** the fact that the vulcanised rubber is an EPDM rubber, a chloroprene rubber or an ACSM rubber.

7. The power transmission belt according to one of the claims 1 to 6, **characterised by** the fact that at least three narrow strips (4) are arranged next to one another across the belt width.

8. The power transmission device according to one of the claims 1 to 7, **characterised by** the fact that the belt is a V-belt, a V-ribbed belt or a toothed belt.

## Revendications

1. Courroie de transmission de force sous la forme d'une courroie sans fin, constituée par au moins un matériau de courroie (2) ayant une direction longitudinale de courroie et une largeur de courroie qui s'étend transversalement à celle-ci, comportant un dos de courroie (1), une zone de support de traction (3) ayant plusieurs supports de traction agencés parallèlement les par rapport aux autres et à distance les uns à côté des autres sur la largeur de courroie et ayant une zone de transmission de force (6) qui se raccorde à la zone de support de traction (3), **caractérisée en ce que** les supports de traction sont formés par au moins deux rubans étroits (4) d'un matériau pré-étiré en matière plastique qui sont agencés l'un à côté de l'autre sur la largeur de courroie, les rubans (4) présentant chacun une distance (5) l'un de l'autre en direction de la largeur, qui est remplie par le matériau de courroie (2), la distance (5) étant comprise entre ½ et 1/6 de la largeur du ruban (4), les rubans (4) formant les supports de traction étant formés par un enroulement spiralé d'un ruban sur la largeur de courroie.

2. Courroie de transmission de force selon la revendication 1, **caractérisée en ce que** les rubans (4) sont constitués en polyamide, en particulier en polyamide 6 ou en polyamide 6.6.

3. Courroie de transmission de force selon la revendication 1 ou 2, **caractérisée en ce que** les rubans (4) présentent une largeur comprise entre 1 et 25 mm et un poids en longueur entre 900 dtex et 80000 dtex.

4. Courroie de transmission de force selon l'une des revendications 1 à 3, **caractérisée en ce que** le matériau enrobant les rubans est le matériau de la zone de transmission de force (6).

5. Courroie de transmission de force selon l'une des revendications 1 à 4, **caractérisée en ce que** le matériau de courroie (2) enrobant les rubans est du caoutchouc vulcanisé, du polyuréthane ou du chlorure de polyvinyle.

6. Courroie de transmission de force selon la revendication 5, **caractérisée en ce que** le caoutchouc vulcanisé est un caoutchouc EPDM, CR ou ACSM.

7. Courroie de transmission de force selon l'une des revendications 1 à 6, **caractérisée en ce qu'**au moins trois rubans étroits (4) sont agencés les uns à côté des autres sur la largeur de courroie.

8. Courroie de transmission de force selon l'une des revendications 1 à 7, **caractérisée en ce que** la courroie est une courroie trapézoïdale, une courroie à nervures trapézoïdales ou une courroie dentée.
